# EUROPEAN PATENT SPECIFICATION

(11) **EP 1 813 175 B1**
(45) Date of publication and mention of the grant of the patent: **17.12.2008**
(21) Application number: 05825306.3
(22) Date of filing: 15.11.2005
(51) Int. Cl.: A47J 37/10

(54) **IMPROVED FRYING PAN**
VERBESSERTE BRATPFANNE
POELE PERFECTIONNEE

(30) Priority: 16.11.2004 ES 200402749
(43) Date of publication of application: 01.08.2007
(73) Proprietor: Ginerva Frying Pan Internacional, S.A., 08784 Piera (ES)
(72) Inventor: GINER PEÑA, Diego, Pol. Ind. de Piera, 08784 Piera (ES)
(74) Representative: Esteban Perez-Serrano, Maria Isabel
(86) International application number: PCT/ES2005/070157
(87) International publication number: WO 2006/053932

(56) References cited:
- FR-A- 2 725 889
- US-A- 5 323 693
- US-B1- 6 439 110

## Description

### OBJECT OF THE INVENTION.

The present invention relates to an improved frying pan which, at the time of removing the cooked products from said pan to reservoir them on a plate or tray, allows them to be drained of the surplus oil.

The frying pan is characterized in having an oil reservoir which stores the same on inclining the pan, when removing the cooked product.

Additionally the frying pan is characterized in having a grille which allows the used oil to be filtered, leaving it ready for later use.

### BACKGROUND OF THE INVENTION.

A great variety of frying pans dedicated to multiple uses are to be found on the market of kitchen utensils and more specifically in the field related with the frying of foodstuffs.

Among the different solutions that allow the products to be removed dry and free of oil is the widely known solution in which a stainless steel grille having the same shape as the pan is simply adapted to a conventional frying pan. One such device is described in US 6 439 110 B1.

In the Utility Model with publication number U8901420 a frying pan is described with draining basket with handle, characterized in that the basket is fitted with means of support on the frying pan.

In this case, the oil is not filtered and cleaned of impurities and must be discarded or filtered by additional means after its use.

All these drawbacks are overcome by means of the invention disclosed hereunder.

### DESCRIPTION OF THE INVENTION.

The present invention relates to an improved frying pan which allows the products to be removed from the same drained of oil, at the time when the frying pan is inclined to deposit the cooked product on the plate or tray.

For this, the frying pan has a reservoir to collect the oil, separated from the area for frying the foodstuffs by a grille which is movable and detachable in order to be able to clean the inside of said reservoir.

The grille has an upper area in which there are some orifices of greater size through which the oil enters with the typical impurities thereof after having made use of it, and a lower area with some orifices of smaller size which acts as a filter of those impurities and allows the oil to return to the frying pan free of them.

The reservoir has an inclination with respect to the bottom of the frying pan to facilitate the return of the oil to the same.

In addition this inclination will direct the oil toward the bottom area of the grille which has the orifices of smaller size which carry out the function of filtering impurities for the oil.

At a certain height from the bottom of the frying pan there is a circumferential mark of the oil level which defines the maximum volume of oil that can be put therein so that when it is inclined to remove the products, the oil does not spill over the edges, and can be wholly contained inside the reservoir.

### DESCRIPTION OF THE DRAWINGS.

The present descriptive specification is completed with a set of drawings, which illustrate, in a non-restrictive manner, the preferred embodiment of the invention.

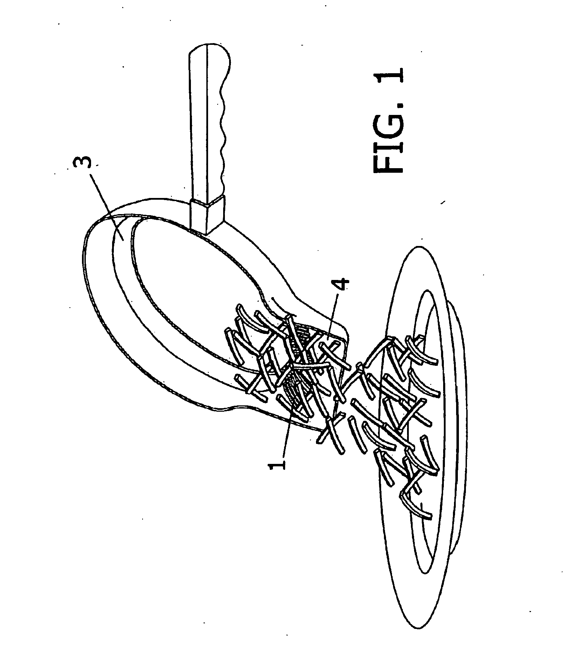

Figure 1 shows a perspective of the frying pan of the invention with the mouth to direct the egress of the products.

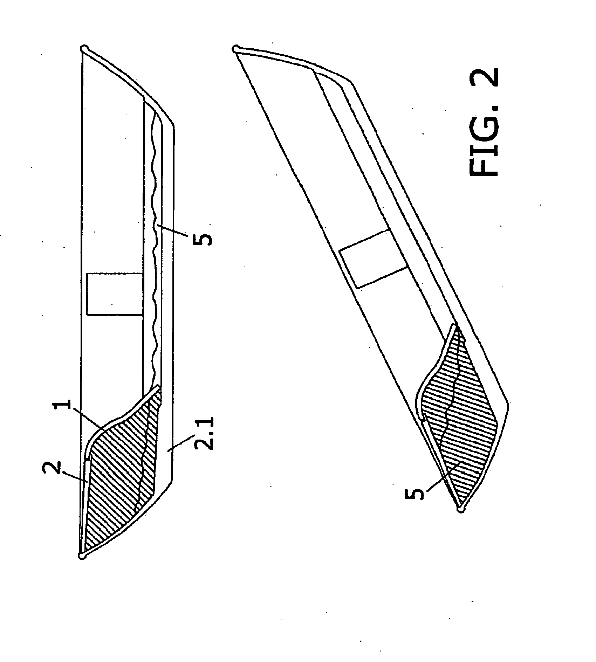

Figure 2 shows two sections of the frying pan in different inclinations.

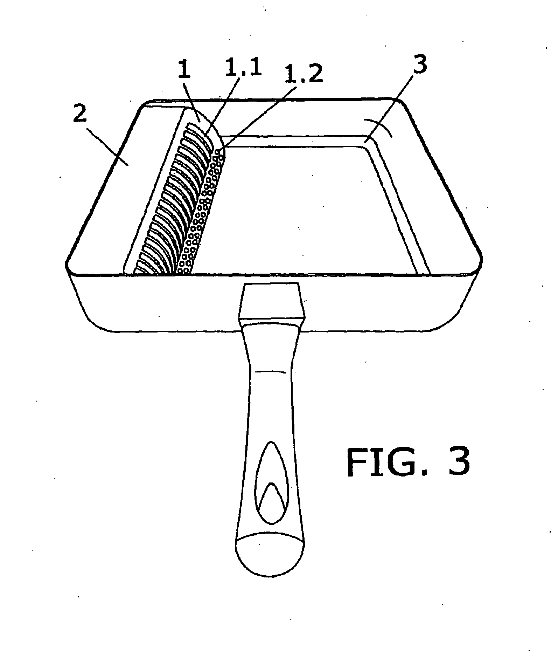

Figure 3 shows a perspective of the frying pan of the invention without the mouth to direct the egress of the products.

### PREFERRED EMBODIMENT OF THE INVENTION.

In the light of the foregoing, the present invention consists of a frying pan with grille (1) which allows the cooked products therein to be removed free of oil.

The frying pan of the invention shows a reservoir (2) for oil on one side thereof.

The inside face of the reservoir will be closed with the grille (1) which has two different openings, some rectangular (1.1) of greater size, for the oil and the impurities therein to pass on inclining the frying pan to remove the cooked product, and other circular orifices (1.2) of smaller size through which the oil passes when it returns to the frying pan being filtered.

The bottom of the reservoir (2) has an inclination (2.1) between 10° and 15° which facilitates the return of the oil (5) to the frying pan when the cooked product has been removed.

In this way the oil remains in the frying pan ready for its use and is perfectly clean.

In the lower part of the frying pan an area is shown with a different radius of curvature than the rest of the same, by way of a mark (3) of the oil level.

The level marks the maximum quantity of oil (5) that can be held in the reservoir (2). Therefore if the mark (3) of the oil level is respected, the oil (5) will never overflow from the frying pan on inclining the latter.

The frying pan can have on the upper part of the reservoir (2), a concave mouth (4) by way of a continuation which directs the egress of the product to the exterior.

The frying pan of the invention is made of aluminium.

The essential nature of this invention is not altered by variations in materials, form, size and arrangement of the component elements, described in a non-restrictive manner, sufficient for an expert to proceed to the reproduction thereof within the scope of the claims.

## Claims

1. A frying pan **characterized in that** it has a reservoir (2) for collecting the oil with an inclination (2.1) with respect to the bottom of the frying pan, separated from the frying area of the foodstuffs by a movable and detachable grille (1) with upper openings (1.1) of greater size and lower openings (1.2) of smaller size which filter the impurities from the oil, the frying pan has a mark (3) showing the maximum level of oil that the reservoir can hold.

2. A frying pan according to claim 1 **characterized in that** the upper openings (1.1) are rectangular in shape.

3. A frying pan according to claim 1 **characterized in that** the lower openings (1.2) are circular in shape.

4. A frying pan according to claim 1 **characterized in that** the inclination (2.1) is between 10° and 15° with respect to the bottom of the frying pan.

5. A frying pan according to claim 1 **characterized in that** it has a mouth (4) in the upper part of the same (2) which directs the products when removing them to the exterior.

## Patentansprüche

1. Eine Bratpfanne, die **dadurch gekennzeichnet ist, dass** diese über ein Sammelabteil (2) zum Sammeln des Öls mit einer Neigung (2.1) gegenüber dem Boden der Bratpfanne verfügt, das von dem Bratbereich der Nahrungsmittel mittels eines beweglichen und abnehmbaren Gitters (1) mit oberen Öffnungen (1.1) mit einem größeren Format und unteren Öffnungen (1.2) mit einem kleineren Format getrennt ist, welche die Verunreinigungen aus dem Öl filtern, die Bratpfanne besitzt eine Markierung (3) zur Anzeige der maximalen Höhe des Öls, welche das Sammelabteil aufnehmen kann.

2. Eine Bratpfanne nach Anspruch 1, **dadurch gekennzeichnet, dass** die oberen Öffnungen (1.1) eine rechteckige Form besitzen.

3. Eine Bratpfanne nach Anspruch 1, **dadurch gekennzeichnet, dass** die unteren Öffnungen (1.2) eine kreisförmige Form besitzen.

4. Eine Bratpfanne nach Anspruch 1, **dadurch gekennzeichnet, dass** die Neigung (2.1) gegenüber dem Boden der Bratpfanne zwischen 10° und 15° beträgt.

5. Eine Bratpfanne nach Anspruch 1, **dadurch gekennzeichnet, dass** diese über einen Ausgang (4) in dem oberen Teil derselben (2) verfügt, welcher die Produkte leitet, wenn diese nach Außen befördert werden.

## Revendications

1. Une poêle à frire **caractérisée en ce qu'**elle possède un réservoir (2) pour recueillir l'huile avec une inclinaison (2.1) par rapport à la base de la poêle à frire, séparé de la zone de friture des denrées alimentaires par une grille (1) mobile et détachable avec des ouvertures supérieures (1.1) de plus grande taille et des ouvertures inférieures (1.2) de plus petite taille qui filtrent les impuretés de l'huile, la poêle à frire possède une marque (3) indiquant le niveau d'huile maximum que le réservoir puisse retenir.

2. Une poêle à frire selon la revendication 1 **caractérisée en ce que** les ouvertures supérieures (1.1) sont de forme rectangulaire.

3. Une poêle à frire selon la revendication 1 **caractérisée en ce que** les ouvertures inférieures (1.2) sont de forme circulaire.

4. Une poêle à frire selon la revendication 1 **caractérisée en ce que** l'inclinaison (2.1) est entre 10° et 15° par rapport à la base de la poêle à frire.

5. Une poêle à frire selon la revendication 1 **caractérisée en ce qu'**elle possède un bec (4) dans la partie supérieure de ce dernier (2) qui guide les produits lorsqu'on les fait glisser à l'extérieur.
